(19) Europäisches Patentamt
European Patent Office
Office européen des brevets

(11) **EP 4 159 702 A1**

(12) **EUROPEAN PATENT APPLICATION**

(43) Date of publication:
**05.04.2023 Bulletin 2023/14**

(21) Application number: **22198559.1**

(22) Date of filing: **28.09.2022**

(51) International Patent Classification (IPC):
**C04B 33/02** (2006.01)    **C04B 33/04** (2006.01)
**C04B 33/24** (2006.01)

(52) Cooperative Patent Classification (CPC):
**C04B 33/025; C04B 33/02; C04B 33/04;**
**C04B 33/24;** C04B 2235/3472; C04B 2235/349;
C04B 2235/5436; C04B 2235/5472; C04B 2235/96;
C04B 2235/9615; C04B 2235/9638

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.09.2021 JP 2021159212**

(71) Applicant: TOTO LTD.
**Kokurakita-ku**
**Kitakyushu-shi, Fukuoka 802-8601 (JP)**

(72) Inventors:
• **Kasahara, Shingo**
 **Kitakyushu-shi, 802-8601 (JP)**

• **Arasaki, Tomonori**
 **Kitakyushu-shi, 802-8601 (JP)**
• **Komiya, Gennosuke**
 **Kitakyushu-shi, 802-8601 (JP)**

(74) Representative: **Bandpay & Greuter**
**30, rue Notre-Dame des Victoires**
**75002 Paris (FR)**

Remarks:
A request for correction on page 9 of the description has been filed pursuant to Rule 139 EPC. A decision on the request will be taken during the proceedings before the Examining Division (Guidelines for Examination in the EPO, A-V, 3.).

(54) **POTTERY GREENWARE MATERIAL**

(57) Disclosed is a pottery greenware material by which a pottery having both productivity and quality can be produced with a high degree of freedom depending on an intended use thereof. The pottery greenware material includes a first greenware material and a second greenware material; both the first greenware material and the second greenware material including, as chemical species, $SiO_2$, $Al_2O_3$, and either one or both of $K_2O$ and $Na_2O$; and an average particle diameter (D2) of the second greenware material being smaller than an average particle diameter (D1) of the first greenware material.

EP 4 159 702 A1

**Description**

[Technical Field]

The present invention relates to a pottery greenware material, more specifically, to a pottery greenware material by which a pottery having both excellent productivity and quality can be produced with a high degree of freedom depending on an intended use thereof.

[Background Art]

As greenware raw materials usable for producing a pottery product such as a sanitary ware, for example, known are stone-based raw materials such as pottery stone and silica stone, which becomes a skeleton of a pottery; clay which can impart plasticity to a pottery greenware material while the pottery greenware material is molded; and feldspar which acts as a melting agent while a molded body is fired (JP H06-056516 A (Patent Literature 1), JP 2001-287981 A (Patent Literature 2), and JP 2011-116568 A (Patent Literature 3)). These pottery greenware raw materials are mixed, and then, are processed into a pottery greenware material. As methods for mixing the greenware raw materials, a grinding/mixing method with a grinding means such as a ball mill, or a stirring/mixing method without stirring is used, depending on the kinds of the raw materials. For example, in the regions such as Japan, China, Taiwan, and Indonesia, there is a tendency that the greenware raw materials mainly composed of the stone-based raw materials are used, and the greenware raw materials are processed into a greenware material by the grinding/mixing method. On the other hand, in the regions such as the United States, Mexico, Thailand, and India, there is a tendency that the greenware raw materials mainly composed of powdery materials are used, and the greenware raw materials are processed into a greenware material by the stirring/mixing method.

According to the stirring/mixing method, there is a tendency that it is generally easy to make a fine greenware-designing, while making the most of the inherent properties of each raw material (namely, additivity can be readily obtained), so that a greenware having special properties such as low degree of deformation and high strength can be readily produced; but the consolidation ability (productivity) is reduced while a pottery greenware material is molded. On the other hand, according to the grinding/mixing method including the step of grinding the raw materials, there is a tendency that it is generally difficult to make a fine greenware-designing, while making the most of the inherent properties of each raw material; but, a greenware having a relatively high consolidation ability can be easily produced because the stone-based materials can be used as the raw material.

It is rather common that a greenware material is produced by grinding/mixing or stirring/mixing a plurality of raw materials in a lump. For example, Patent Literature 1 describes a method (A) for preparing a slurry in which all of greenware raw materials are mixed and stirred without a grinding step, and a method (B) for preparing a slurry in which all of greenware raw materials are put into a pot mill and then are grinded until particles having a particular average particle diameter can be obtained (see, paragraph 0055). Furthermore, Patent Literature 2 describes that a greenware material was produced by wet grinding of greenware raw materials in a pot mill (see, paragraph 0019), and JP 2011-116568 A (Patent Literature 3) describes that a greenware material was produced by grinding/mixing greenware raw materials with a ball mill (see, paragraph 0044).

Besides the methods as described above in which the greenware material is produced by either grinding/mixing or stirring/mixing all of the greenware raw materials, there is also the case that, for example, when the stone-based raw materials are used, a greenware material is produced by a method in which only the stone-based raw materials are separately grinded, and then, the resulting grinded stone-based raw materials and the rest of the raw materials are grinded and mixed. Furthermore, there is an example in which some of the raw materials are grinded and mixed, and the rest of the raw materials are stirred and mixed, and then, the resulting products thus obtained are mixed to produce a greenware material. For example, CN 112094100 A (Patent Literature 4) describes a method like the above in which a plurality of greenware raw materials are divided into two groups in consideration of the properties of the respective raw materials, and then, one group is grinded and mixed, and the other group is stirred and mixed; and then, these two greenware slurries each containing different materials are mixed to obtain a ceramic greenware slurry.

Specifically, Patent Literature 4 teaches that a ceramic greenware slurry can be produced with high efficiency by mixing a slurry obtained by the grinding/mixing with a ball mill a raw material group including a hard and lean raw material, a ball-containing raw material A that belongs to a semi-lean and semi-plastic raw material, and a ball-containing raw material C that belongs to a soft plastic raw material with a slurry obtained by stirring/mixing a raw material group including a pre-slurry raw material B that belongs to a semi-lean and semi-plastic raw material and a pre-slurry raw material D that is originated from a soft plastic raw material (see, Fig. 1, and Abstract). According to Patent Literature 4, it is understood that the hard and lean raw material included in only one slurry contains feldspar, silica stone, quartz, dolomite, and the like (claim 7), and that the semi-lean and semi-plastic raw material to which the ball-containing raw material A and the pre-slurry raw material B belong contains clays such as kaolin and China clay (claim 8), and that the soft plastic raw material to which the ball-containing raw material C and the pre-slurry raw material D belong contains clays such as ball clay and China clay (claim 9).

In the method for producing the ceramic greenware slurry described in Patent Literature 4, the plurality of greenware raw materials are divided into two groups, and each of the two groups is treated by different mixing methods, and the resulting two slurries thus treated are mixed to finally obtain a single greenware slurry. Therefore, the production process described in Patent Literature 4 is somewhat complicated. Also, there is a difference between the raw material group to be grinded and mixed and the raw material group to be stirred and mixed in that the former includes the hard and lean raw material, whereas the latter does not include the hard and lean raw material. Therefore, there is a difference between the materials included in the slurry obtained by grinding/mixing the one raw material group and the materials included in the slurry obtained by stirring/mixing the other raw material group. As a result, during the time when the greenware slurry obtained by mixing these two slurries is molded, there is a possibility that any unevenness is generated in an intermediate body or a molded body to be obtained.

On the other hand, when focusing on a chemical composition after firing, a pottery greenware material usually contains $SiO_2$ and $Al_2O_3$ as its main component, and the ratio of these components varies depending on greenware raw materials to be used (kinds and amounts thereof), firing conditions, and the like. Patent Literatures 1 to 3 describes the greenware material containing more $SiO_2$ than $Al_2O_3$. Furthermore, the composition ratio of $SiO_2$ and $Al_2O_3$ is controlled under the above condition.

In recent years, the need for higher designability and quality of sanitary ware is increasing, and as a result, pottery products having designability and quality high enough to satisfy the need are required (for example, high strength and light weight). In addition, in order to flexibly respond to the required design and quality variation, a sanitary ware having high productivity or a high yield is required.

[Citation List]

[Patent Literature]

[Patent Literature 1] JP H06-56516 A
[Patent Literature 2] JP 2001-287981 A
[Patent Literature 3] JP 2011-116568 A
[Patent Literature 4] CN 111393188 A

[Summary of Invention]

[Technical Problem]

The inventors of the present invention have confirmed that a pottery having both productivity and quality can be produced by mixing a plurality of greenware materials, each of which can be independently used to produce a pottery and which have different average particle diameters. The inventors have also confirmed that, in particular, mixing a plurality of pottery greenware materials, each of which can be independently used to produce a pottery, can make a production process thereof simpler, and can make a productivity thereof higher, and can make a mixing ratio of the materials determined as appropriate depending on an intended use thereof, and thus, the pottery can be produced with a high degree of freedom. The inventors have further confirmed that, since the main chemical species ($SiO_2$, $Al_2O_3$, and either one or both of $K_2O$ and $Na_2O$) in each of the pottery greenware materials to be mixed are the same, whereas the average particle diameters of the substances (particles) actually constituting the pottery greenware materials to be mixed are different, the pottery having less unevenness and high ability can be produced even when these pottery greenware materials are mixed with various mixing ratios. The present invention is based on these findings.

Accordingly, an object of the present invention is to provide a pottery greenware material by which a pottery having both excellent productivity and quality can be produced with a high degree of freedom depending on an intended use thereof.

[Solution to Problem]

The pottery greenware material according to the present invention is a pottery greenware material comprising a first greenware material and a second greenware material, wherein

both the first greenware material and the second greenware material comprise, as chemical species, $SiO_2$, $Al_2O_3$,

and either one or both of $K_2O$ and $Na_2O$; and
an average particle diameter (D2) of the second greenware material is smaller than an average particle diameter (D1) of the first greenware material.

[Effects of Invention]

According to the present invention, the pottery greenware material by which a pottery having both excellent productivity and quality can be produced with a high degree of freedom depending on an intended use thereof is provided.

[Description of Embodiments of Invention]

The pottery greenware material according to the present invention includes a first greenware material and a second greenware material. Both the first greenware material and the second greenware material include, as the chemical species, at least $SiO_2$, $Al_2O_3$, and either one or both of $K_2O$ and $Na_2O$ during the period of firing. Because of including these chemical species as the essential components during the period of firing, in other words, because these chemical species can be generated by firing, a pottery can be produced by each of the first greenware material and the second greenware material independently. Because the pottery greenware material according to the present invention is a mixture (blend) of the plural kinds of greenware materials by each of which a pottery can be produced independently, the production process thereof is simple, and productivity thereof is high. In addition, depending on an intended use of the pottery to be produced, the blending ratio of the first greenware material and the second greenware can be determined as appropriate, so that the pottery can be produced with a high degree of freedom. Because of the high degree of freedom, the yield can be increased.
As far as the pottery greenware material according to the present invention includes the first greenware material and the second greenware material, there is no particular restriction in the content ratio of the first greenware material and the second greenware material, namely, in the mixing ratio of the first greenware material and the second greenware material; so, the ratio can be determined as appropriate. Because the mixing ratio of the first greenware material and the second greenware by each of which a pottery can be produced independently, can be determined as appropriate depending on an intended use of the pottery to be produced, the degree of freedom in production of the pottery greenware material is increased; thus, the ability of the first greenware material and the ability of the second greenware material can be selectively incorporated into the pottery greenware material. As a result, the pottery greenware material having a desirable ability can be obtained. The abilities (properties) of the pottery greenware material according to the present invention will be described later.
In the present invention, the expression, "a (the) greenware material by which a (the) pottery can be produced independently", means that by using only said greenware material, namely, without adding any material to said greenware material, or without any need of, for example, conducting a treatment something special in the production process of said greenware material, a pottery having an ability usually required can be produced by a known method. In other words, it means that by using only said greenware material a molded body can be produced by a known molding method, and furthermore, from the molded body a fired body can be produced by a known firing method, and furthermore, a pottery can be produced by cooling the fired body.
In addition, in the pottery greenware material according to the present invention, the average particle diameter (D1) of the first greenware material differs from the average particle diameter (D2) of the second greenware material, and specifically, D2 is smaller than D1. Namely, not only the condition that the main chemical species ($SiO_2$, $Al_2O_3$, and either one or both of $K_2O$ and $Na_2O$) in each greenware material to be mixed are the same; but also the condition that the average particle diameters of the substances (particles) actually constituting the greenware materials are different from each other (D2<D1) make it possible to generate no unevenness during the period of molding the pottery greenware material and during the period of firing the molded body thus obtained, as well as make it possible to produce the pottery having high ability, even when the first greenware material is mixed with the second greenware material in various mixing ratios.

First Greenware Material

Raw Materials

It is preferable that the first greenware material is prepared by using pottery stone as the raw material. The minerals such as quartz, sericite, and kaolin, which constitute the pottery stone, not only impart consolidation ability to the molded body made of the first greenware material but also become a main skeleton of the molded body. Enhancement of the consolidation ability increases the productivity. Illustrative examples of the usable pottery stone include sericite pottery stone and kaolin pottery stone.

It is preferable that the first greenware material is prepared by using mainly a stone-based raw material. Illustrative examples of the stone-based raw material include pottery stone, feldspar, and dolomite. Feldspar and dolomite impart sintering densification to the fired body made of the first greenware material. Because dolomite can lower the firing temperature, the energy cost can be reduced, and a pottery product can be produced economically. Furthermore, dolomite is suitable for industrial production (mass production) of the pottery product.

Illustrative examples of feldspar include feldspar minerals such as potassium feldspar, soda feldspar, and anorthite, as well as nephelite, natural glass, and frit, and the like. These raw materials are included abundantly in various feldspar raw materials, as well as in nepheline syenite, cornish stone, weathered granite, vitreous volcanic rock, and various pottery stones. Also, these raw materials are partly included in a clayey raw material. Among these feldspars, especially, those abundantly containing $K_2O$ and $Na_2O$ as alkali components are preferable. For instance, potassium feldspar, soda feldspar, nephelite are preferable. When intending to lower the amount of quartz as low as possible, nepheline syenite, which substantially does not include quartz at all in the composition thereof, is preferably used. These feldspar minerals melt during fired to form a vitreous phase, but there is no problem even if they remain partially in a form of crystal without melting.

According to a preferred embodiment of the present invention, it is preferable that the raw material for producing the first greenware material contains pottery stone, clay (powder), and feldspar as the main components thereof.

Illustrative examples of the clay include clayey minerals such as kaolinite, halloysite, metahalloysite, dickite, and pyrophyllite, as well as clayey mica such as sericite and illite. These minerals are abundantly included in the clayey raw materials such as gairome clay, Kibushi clay, kaolin, ball clay, China clay, as well as various pottery stones, or are partly included in feldspar raw materials. Among these clays, kaolinite and halloysite are excellent, especially in enhancing the plasticity during the period of molding, and sericite has a significant effect to lower the firing temperature of the greenware. The minerals of these clays melt during fired to form a vitreous phase, but there is no problem even if they remain partially in a form of crystal without melting.

In the present invention, the raw material for producing the first greenware material may include α-alumina. For example, the first greenware material may be prepared in such a way that α-alumina is separately grinded, and then, the resulting product is added to the greenware raw material mentioned above, and then, the resulting product is the grinded and mixed. On the other hand, the raw material for producing the first greenware material may not include α-alumina.

Preparation Method

In the present invention, it is preferable that the first greenware material is prepared by grinding and mixing (herein also referred to as "grinding/mixing") the raw material described above (herein also referred to as "first greenware raw material"). The first greenware raw material contains the stone-based raw material as the main component thereof; so, the greenware material having a desired average particle diameter can be obtained by grinding/mixing of these raw materials. The average particle diameter (D1) of the first greenware material is preferably in the range of 3 μm to 15 μm, more preferably in the range of 5 μm to 12 μm, and also is larger than the average particle diameter (D2) of the second greenware material to be described later. In particular, when the first greenware raw material contains quartz or α-alumina, which constitutes the pottery stone, excellent strength and thermal shock resistance can be obtained by adjusting D1 to the above range. The average particle diameter of the greenware material can be measured with a laser diffraction particle diameter distribution measurement instrument (for example, Mastersizer 3000 manufactured by Malvern PANalytical Ltd., or Microtrac MT-3000 manufactured by Nikkiso Co., Ltd.). The average particle diameter can be expressed by the particle diameter (D50) based on the accumulation volume of 50%.

Grinding/Mixing Method

The method for grinding/mixing the first greenware raw material includes a known method using a ball mill, a planetary ball mill, a jet mill, or the like. After grinding, coarse particles may be removed by using classification equipment such as a sieve, as needed. The classification may be done with a known method using a vibration sieve, a sonic wave sieve, various screeners, a centrifuge, or the like.

Composition

In the present invention, the first greenware material preferably includes, as the entire chemical composition thereof during the period of firing, 50% to 75% by weight of $SiO_2$, 17% to 40% by weight of $Al_2O_3$, and 1% to 10% by weight of $K_2O + Na_2O$. In the first greenware material, it is preferable that the content of the vitreous phase is 25% to 70% by weight, and the content of the crystal phase is 75% to 30% by weight. The chemical composition of the main component that constitutes the vitreous phase is preferably 50% to 80% by weight of $SiO_2$, 10% to 40% by weight of

$Al_2O_3$, and 4% to 12% by weight of $K_2O + Na_2O$, when the content of the entire vitreous phase is 100% by weight. The mineral composition of the main component that constitutes the crystal phase is preferably 0% to 60% by weight of $\alpha$-alumina, 0% to 20% by weight of quartz, and 2% to 20% by weight of mullite, when the content of the entire greenware is 100% by weight. According to one embodiment of the present invention, the first greenware material may be a greenware material not containing $\alpha$-alumina as the main mineral composition that constitutes the crystal phase (for example, vitreous greenware). According to one embodiment of the present invention, it is preferable that the amount of $SiO_2$ included in the first greenware material is larger than the amount of $SiO_2$ included in the second greenware material, and that the amount of $Al_2O_3$ included in the first greenware material is smaller than the amount of $Al_2O_3$ included in the second greenware material. According to one embodiment of the present invention, it is preferable that the $SiO_2/Al_2O_3$ ratio in the first greenware material is greater than 1. According to one embodiment of the present invention, it is preferable that the $SiO_2/Al_2O_3$ ratio in the first greenware material is greater than the $SiO_2/Al_2O_3$ ratio in the second greenware material.

The entire composition of the first greenware material during the period of firing may be, for example, the one shown in Table 1 below.

[Table 1]

| | | First greenware material |
|---|---|---|
| Composition of all components in the entirety of fired greenware (% by weight) | L.O.I | 0-0.5 |
| | $SiO_2$ | 50-75 |
| | $Al_2O_3$ | 17-40 |
| | $TiO_2$ | 0-1.0 |
| | $Fe_2O_3$ | 0-1.5 |
| | CaO | 0-3.5 |
| | MgO | 0-1.0 |
| | $K_2O$ | 0-10 |
| | $Na_2O$ | 0-10 |
| | $Li_2O$ | 0.0 |
| | $B_2O_3$ | 0.0 |
| | BaO | 0.0 |
| | TOTAL | 100 |

Second Greenware Material

Raw Materials

It is preferable that the second greenware material is prepared by using silica stone and $\alpha$-alumina as the raw material. Because quartz and $\alpha$-alumina, which constitute the silica stone, become a main skeleton of the molded body made of the second greenware material, low degree of deformation and high strength can be expected.

It is preferable that the second greenware material is prepared by using mainly powdered raw materials. Illustrative examples of the powdered raw material include powders of silica stone, $\alpha$-alumina, feldspar, China clay, and ball clay. The powdered feldspar imparts sintering densification to the fired body made of the second greenware material. The feldspar has been already described as the raw material of the first greenware material.

According to a preferred embodiment of the present invention, it is preferable that the raw material for preparing the second greenware material contains silica stone (powder), $\alpha$-alumina (powder), clay (powder), and feldspar (powder) as the main component thereof. The clay has been already described as the raw material of the first greenware material.

Preparation Method

In the present invention, it is preferable that the second greenware material is prepared by stirring and mixing (herein also referred to as "stirring/mixing") the raw materials described above (herein also referred to as "second greenware raw material"). The second greenware raw material contains the powdered raw material as the main component thereof; so, when the powdered raw material has a desired average particle diameter, the greenware material can be obtained only by stirring/mixing of these raw materials. Because the stirring/mixing method can control the particle diameter distribution of each raw material independently, the method is the simplest method. When the powdered raw material does not have the desired average particle diameter, a step of grinding the raw materials using a ball mill or the like may be added as appropriate to the preparation method. The average particle diameter (D2) of the second greenware material is preferably in the range of 1 $\mu$m to 13 $\mu$m, more preferably in the range of 3 $\mu$m to 10 $\mu$m, and also is smaller than the average particle diameter (D1) of the first greenware material. In particular, when the second greenware raw material contains quartz or $\alpha$-alumina, which constitutes the pottery stone, excellent strength and thermal shock resistance can be obtained by adjusting D2 to the above range.

Stirring/Mixing Method

The method for stirring/mixing the second greenware raw material includes a known method using, for example, Eirich Intensive Mixer (manufactured by Maschinenfabrik Gustav Eirich GmbH & Co KG). After stirring, coarse particles may be removed by using classification equipment such as a sieve, as needed.

Composition

In the present invention, the second greenware material preferably includes, as the entire chemical composition thereof during the period of firing, 20% to 45% by weight of $SiO_2$, 50% to 75% by weight of $Al_2O_3$, and 1% to 10% by weight of $K_2O + Na_2O$. In the second greenware material, it is preferable that the content of the vitreous phase is 25% to 70% by weight, and the content of the crystal phase is 75% to 30% by weight. The chemical composition of the main component that constitutes the vitreous phase is preferably 50% to 80% by weight of $SiO_2$, 10% to 40% by weight of $Al_2O_3$, and 4% to 12% by weight of $K_2O + Na_2O$, when the content of the entire vitreous phase is 100% by weight. The mineral composition of the main component that constitutes the crystal phase is preferably 10% to 60% by weight of $\alpha$-alumina, 0% to 20% by weight of quartz, and 2% to 20% by weight of mullite, when the content of the entire greenware is 100% by weight. According to one embodiment of the present invention, it is preferable that the amount of $SiO_2$ included in the second greenware material is smaller than the amount of $SiO_2$ included in the first greenware material, and that the amount of $Al_2O_3$ included in the second greenware material is larger than the amount of $Al_2O_3$ included in the first greenware material. According to one embodiment of the present invention, it is preferable that the $Al_2O_3/SiO_2$ ratio in the second greenware material is greater than 1. According to one embodiment of the present invention, it is preferable that the $Al_2O_3/SiO_2$ ratio in the second greenware material is greater than the $Al_2O_3/SiO_2$ ratio in the first greenware material.

The entire composition of the second greenware material during the period of firing may be, for example, the ones shown in Table 2 and Table 3 below.

Table 2

| | | Second greenware material |
|---|---|---|
| Composition of all components in the entirety of fired greenware (% by weight) | L.O.I | 0-0.5 |
| | $SiO_2$ | 20-45 |
| | $Al_2O_3$ | 50-75 |
| | $TiO_2$ | 0-1.0 |
| | $Fe_2O_3$ | 0-1.0 |
| | CaO | 0-3.5 |
| | MgO | 0-0.5 |
| | $K_2O$ | 0-10 |
| | $Na_2O$ | 0-10 |
| | $Li_2O$ | 0.0 |
| | $B_2O_3$ | 0.0 |
| | BaO | 0.0 |
| | TOTAL | 100 |

Table 3

| | | Second greenware material |
|---|---|---|
| Composition of all components in the entirety of fired greenware (% by weight) | L.O.I | - |
| | $SiO_2$ | 20-45 |
| | $Al_2O_3$ | 50-75 |
| | $TiO_2$ | 0-4 |
| | $Fe_2O_3$ | 0-2 |
| | CaO | 0-1 |
| | MgO | 0-5 |
| | $K_2O$ | 0-10 |
| | $Na_2O$ | 0-10 |
| | $Li_2O$ | 0-7 |
| | $B_2O_3$ | 0-6 |
| | BaO | 0-4 |
| | TOTAL | 100 |

Pottery Greenware Material according to the present invention

The pottery greenware material according to the present invention can be produced by mixing the first greenware material with the second greenware material at any mixing ratios thereof. In other words, the mixing ratios can be determined as appropriate depending on an intended use of the pottery to be produced; thus, the pottery greenware material having a desired ability can be obtained by selectively incorporating the ability of the first greenware material and the ability of the second greenware into the pottery greenware material.

In one embodiment of the present invention, the method for producing the pottery greenware material according to the present invention is provided, the method includes the steps of:

(a) mixing the first greenware raw material to prepare a first greenware material having a first average particle diameter ($D1_0$),
(b) mixing the second greenware raw materials to prepare a second greenware material having a second average particle diameter ($D2_0$), and
(c) mixing the first greenware material with the second greenware material; wherein

both the first greenware material and the second greenware material contain, as chemical species, $SiO_2$, $Al_2O_3$, and either one or both of $K_2O$ and $Na_2O$; and
after the first greenware material and the second greenware material are mixed (i.e., after the step (c)), an average particle diameter (D2) of the second greenware material is smaller than an average particle diameter (D1) of the first greenware material.

The mixing of the first greenware material with the second greenware material may be carried out with any one of the grinding/mixing method and the stirring/mixing method. It is preferable that the mixing is carried out in such a way that the average particle diameter ($D1_0$) of the first greenware material and the average particle diameter ($D2_0$) of the second greenware material are not be significantly changed.

Molding

Molding of the pottery greenware material according to the present invention can be carried out with a known method such as cast molding, extrusion molding, lathe molding, and press molding. In molding of a large and complex shaped product such as sanitary ware, cast molding can be preferably used.

Firing

A molded body of the pottery greenware material according to the present invention can be fired in a gas furnace or in an electric furnace. The firing temperature and the firing time may be determined as appropriate.

Composition

The pottery greenware material according to the present invention can be configured such that it has a desired composition by freely changing the mixing ratio of the first greenware material and the second greenware material. For example, the chemical composition of all components in the entirety of the pottery greenware material fired ; the content ratio of the vitreous phase and the crystal phase in the pottery greenware material fired; the chemical composition of the main components that constitute the vitreous phase in the pottery greenware material fired; and the mineral composition of the main components that constitute the crystal phase in the pottery greenware material fired; can be freely controlled within the ranges of respective amounts of the components in the first greenware material and in the second greenware material. Because the composition of the pottery greenware material according to the present invention can be freely controlled as described above, the pottery greenware material can exhibits various abilities as described later.

Abilities (Properties)

The pottery greenware material according to the present invention can exhibit the following various abilities because it has the composition described above.

Water Absorption Percentage

With the pottery greenware material according to the present invention, a pottery having a wide range of the water absorption percentage in the range of 4% to 10% can be produced with a high degree of freedom depending on an intended use thereof.

Water absorption percentage is the value measured on the basis of JIS A1509-3. The fired body sample of the greenware material is dried at 110°C for 24 hours, and then is cooled; and thereafter, the mass W1 is measured. Next, the sample is soaked in water in a desiccator, and then is kept under a vacuum state for 1 hour so as to forcibly saturate the open pores thereof with water; then, the mass W2 at this time is measured. The water absorption percentage is obtained by the following equation.

$$\text{Water absorption percentage} = (W2-W1)/W1 \times 100 \ (\%)$$

Deformation Quantity by Firing

With the pottery greenware material according to the present invention, a pottery whose deformation quantity by firing can be freely controlled in a wide range of 4 mm to 13 mm, which is a practically acceptable range, can be produced.

The deformation quantity by firing can be obtained as follows. An unfired specimen having the width of 30 mm, the thickness of 15 mm, and the length of 260 mm is supported with the span of 200 mm during the period of firing, then, the deflection quantity and the thickness of the specimen after firing are measured. Because the deflection quantity is inversely proportional to the square of the thickness of the specimen after firing, the deflection quantity in terms of the converted value to the thickness of 10 mm is obtained from the following equation, as the deformation quantity by firing.

$$\text{Deformation quantity by firing} = (\text{the value of the deflection quantity measured}) \times (\text{the thickness of the specimen after firing})^2 / 10^2$$

Shrinkage Percentage by Firing

With the pottery greenware material according to the present invention, a pottery whose shrinkage percentage by firing can be freely controlled in a wide range of 2.5% to 7.0%, which is a practically acceptable range, can be produced.

The shrinkage percentage by firing is defined by the shrinkage percentage of a fired body test piece of the greenware material in a longitudinal direction, wherein the fired body test piece having the width of 25 mm, the thickness of 5 mm, and the length of 230 mm is heated up to the temperature of 1000°C in 4 hours, and is further heated up to 1200°C in 2 hours, and is further kept at 1200°C for 1 hour; and thereafter, the resulting test piece is naturally cooled down to room temperature.

The pottery produced by the pottery greenware material according to the present invention allows its deformation quantity by firing and its shrinkage percentage by firing to be freely controlled within a practically acceptable wide range, so that the pottery has an excellent designability and can flexibly respond to a design variation. For example, the first greenware material is characterized by relatively high deformation quantity by firing and shrinkage percentage by firing; but with regard to the mixing ratio of the first greenware material and the second greenware material, when the former is adjusted to a lower one, while the latter is adjusted to a higher one, the deformation quantity by firing and the shrinkage percentage by firing of the pottery greenware material can be controlled to ones similar to the deformation quantity by firing and the shrinkage percentage by firing of the second greenware material, namely, a lower deformation quantity by firing and a lower shrinkage percentage by firing. Also, for example, the second greenware material is characterized by a relatively high water absorption percentage; but with regard to the mixing ratio of the first greenware material and the second greenware material, when the former is adjusted to a higher one, while the latter is adjusted to a lower one, water absorption percentage of the pottery greenware material can be controlled to one similar to the water absorption percentage of the first greenware material, namely, a lower water absorption percentage.

Strength

With the pottery greenware material according to the present invention, a pottery having an excellent strength of a wide range of 80 MPa to 120 MPa can be produced.

The strength is measured as follows: the test piece having the size of $\phi 13 \times 130$ mm is provided, and the 3-point bending test is carried out to the test piece under the condition of the span of 100 mm and the crosshead speed of 2.5 mm/min with an autograph.

Thermal Shock Resistance (Resistance to Quick Cooling)

With the pottery greenware material according to the present invention, a pottery having the thermal shock resistance of preferably about 120°C to about 150°C, more preferably about 130°C to about 150°C can be produced.

The thermal shock resistance is evaluated as follows: the fired body test piece having the width of 25 × thickness of 10 × length of 110 mm is kept at a given temperature for 30 minutes or longer, and then is quickly cooled by throwing into water to check whether a crack is generated or not. Then, the quick cooling temperature is raised by 10°C repeatedly; then, the maximum difference between the initial temperature and the temperature at which a crack is generated is evaluated as the thermal shock resistance.

Thermal Expansion

With the pottery greenware material according to the present invention, a pottery having the thermal expansion coefficient of about $70 \times 10^{-7}$/°C can be produced.

The thermal expansion is evaluated by measuring the coefficient of linear thermal expansion of the fired body test piece having the diameter of 5 mm and the length of 20 mm, by a compressive load method and under the measurement temperature of 50 to 600°C, using a differential expansion measurement instrument.

Crazing Resistance

With the pottery greenware material according to the present invention, a pottery having a crazing resistance can be produced. The inventors of the present invention have confirmed that with a non-vitreous greenware material alone, a sufficient crazing resistance cannot be obtained. Contrary to this, with the pottery greenware material according to the present invention containing both the first greenware material and the second greenware material, an excellent crazing resistance can be obtained.

Crazing Resistance is evaluated as follows. The sample is prepared by applying a Bristol glaze, which is generally used for the sanitary ware, to the greenware material with a spraying method, followed by firing the resulting product. Next, penetration test is conducted using an autoclave in accordance with JIS A 5207; then, the sample is soaked in red ink to evaluate the occurrence of the penetration by visual inspection.

The pottery produced from the pottery greenware material according to the present invention has excellent strength, thermal shock resistance, and crazing resistance; and thus is excellent in quality.

[Examples]

The present invention will be specifically described on the basis of the Examples described below, but the scope of the present invention is not at all limited to these Examples.

Preparation of First Greenware Material

About 48% by weight of sericite pottery stone and kaolin pottery stone which are the skeleton-forming materials, about 35% by weight of China clay (powder) and ball clay (powder) which are the plasticizing materials, about 15% by weight of feldspar which is the main sintering assisting agent, and about 2% by weight of dolomite, as well as appropriate amounts of water and of sodium silicate which is the deflocculant were altogether put into a ball mill, and were subjected to wet grinding so that the particle size of particles grinded in a greenware slurry obtained, which is measured with a laser diffraction particle size distribution analyzer, is characterized in that the percentage of particles having the particle diameter of 10 μm or less is about 58% and that the median particle diameter (D50) is about 8.0 μm, to obtain the first greenware material.

Preparation of Second Greenware Material

About 64% by weight of silica stone and α-alumina which are the skeleton-forming materials, about 32% by weight of China clay (powder) and ball clay (powder) which are the plasticizing materials, and about 4% by weight of feldspar which is the sintering assisting agent, as well as appropriate amounts of water and of sodium silicate which is the deflocculant were altogether put into Eirich Intensive Mixer (manufactured by Maschinenfabrik Gustav Eirich GmbH & Co KG), and were subjected to mixing with stirring so that the particle size of particles stirred in a greenware slurry obtained, which is measured with a laser diffraction particle size distribution analyzer, is characterized in that the percentage of particles having the particle diameter of 10 μm or less is about 75% and that the median particle diameter (D50) is about 5.0 μm, to obtain the second greenware material.

Preparation of Pottery Greenware Material

The first greenware material and the second greenware material were mixed with each other at the mixing ratio as shown in Table 4 to obtain four kinds of pottery greenware materials. The mixing was carried out by the stirring/mixing method.

Preparation of Molded Body

The pottery greenware materials thus obtained were molded by a slurry-cast molding method using a gypsum mold to obtain molded bodies.

Preparation of Fired Body

The molded bodies thus obtained were fired in an electric furnace to obtain fired bodies. The maximum temperature in the heat curve was about 1200°C. The fired bodies thus obtained were evaluated as follows.
The chemical composition of all components in the entirety of the respective pottery greenware materials fired; as well as the chemical composition of the vitreous phases and of the crystal phases in the pottery greenware materials fired were as shown in Table 4.

Evaluation

Properties of the four kinds of pottery greenware materials were measured as described below. The results thereof were shown in Table 4.

Water Absorption Percentage

The water absorption percentages were measured on the basis of JISA1509-3. The fired body samples of the greenware materials were dried at 110°C for 24 hours, and then were cooled, and thereafter, the mass $W1$ of the respective samples were measured. Next, the samples were soaked in water in a desiccator, and then were kept under a vacuum state for 1 hour so as to forcibly saturate the open pores thereof with water; then, the mass $W2$ of the respective samples at this time were measured. The water absorption percentages were obtained by the following equation.

$$\text{Water absorption percentage} = (W2-W1)/W1 \times 100 \ (\%)$$

Deformation Quantity by Firing

The deformation quantity by firing was obtained as follows. The unfired specimens each having the width of 30 mm, the thickness of 15 mm, and the length of 260 mm were supported with the span of 200 mm during the period of firing, then, the deflection quantity and the thickness of the specimens after firing were measured. Because the deflection quantity is inversely proportional to the square of the thickness of the specimen after firing, the deflection quantity in terms of the converted value to the thickness of 10 mm was obtained from the following equation as the deformation quantity by firing.

$$\text{Deformation quantity by firing} = (\text{the value of the deflection quantity measured}) \times (\text{the thickness of the specimen after firing})^2 / 10^2$$

Shrinkage Percentage by Firing

The shrinkage percentage by firing was defined by the shrinkage percentage by firing of the fired body test pieces of the greenware materials in a longitudinal direction, wherein the fired body test pieces having the width of 25 mm, the thickness of 5 mm, and the length of 230 mm were heated up to the temperature of 1000°C in 4 hours, and were further heated up to 1200°C in 2 hours, and were further kept at 1200°C for 1 hour; and thereafter, the resulting test pieces were naturally cooled down to room temperature.

Strength

The strength was measured as follows. the fired body test pieces of the greenware materials having the size of $\phi13 \times 130$ mm were provided, and the 3-point bending test was carried out to the test pieces under the condition of the span of 100 mm and the crosshead speed of 2.5 mm/min with an autograph.

Thermal Shock Resistance (Resistance to Quick Cooling)

The thermal shock resistance was evaluated as follows: the fired body test pieces having the width of 25 $\times$ thickness of 10 $\times$ length of 110 mm were kept at a given temperature for 30 minutes or longer, and then were quickly cooled by throwing into water to check whether a crack was generated or not. Then, the quick cooling temperature was raised by 10°C repeatedly; then, the maximum difference between the initial temperature and the temperature at which a crack was generated was evaluated as the thermal shock resistance.

Thermal Expansion

The thermal expansion was evaluated by measuring the coefficient of linear thermal expansion of the fired body test pieces having the diameter of 5 mm and the length of 20 mm, by a compressive load method and under the measurement temperature of 50 to 600°C, using a differential expansion measurement instrument.

Crazing Resistance

The samples were prepared by applying a Bristol glaze, which is generally used for the sanitary ware, to the greenware material with a spraying method, followed by firing the resulting products. Next, penetration test was conducted using an autoclave in accordance with JIS A 5207; then, the fired body samples were soaked in red ink to evaluate the occurrence of the penetration by visual inspection.

[Table 4]

| | | Second greenware material (stirring/mixing) | Pottery greenware material according to the present invention (Mixture of first greenware material and second greenware material) | | | | First greenware material (grinding/mixing) |
|---|---|---|---|---|---|---|---|
| | | | Second greenware : First greenware 80 : 20 | Second greenware : First greenware 70 : 30 | Second greenware : First greenware 60 : 40 | Second greenware : First greenware 50 : 50 | |
| Composition of all components in the entirety of fired greenware (% by weight) | L.O.I | 0.4 | 0.4 | 0.4 | 0.4 | 0.4 | 0.4 |
| | $SiO_2$ | 26.5 | 34.9 | 39.1 | 43.3 | 47.5 | 68.9 |
| | $Al_2O_3$ | 70.7 | 61.3 | 56.7 | 52.1 | 47.6 | 24.1 |
| | $TiO_2$ | 0.4 | 0.3 | 0.3 | 0.3 | 0.3 | 0.2 |
| | $Fe_2O_3$ | 0.4 | 0.5 | 0.5 | 0.6 | 0.6 | 0.8 |
| | CaO | 0.1 | 0.3 | 0.4 | 0.5 | 0.6 | 1.2 |
| | MgO | 0.1 | 0.3 | 0.3 | 0.3 | 0.3 | 0.6 |
| | $K_2O$ | 1.2 | 1.4 | 1.5 | 1.6 | 1.8 | 2.4 |
| | $Na_2O$ | 0.4 | 0.6 | 0.7 | 0.8 | 0.8 | 1.3 |
| | $Li_2O$ | 0.0 | 0.0 | 0.0 | 0.0 | 0.0 | 0.0 |
| | $B_2O_3$ | 0.0 | 0.0 | 0.0 | 0.0 | 0.0 | 0.0 |
| | BaO | 0.0 | 0.0 | 0.0 | 0.0 | 0.0 | 0.0 |
| | TOTAL | 100 | 100 | 100 | 100 | 100 | 100 |
| Vitreous phase (% by weight) | | 30 | 38 | 42 | 46 | 49 | 67 |
| Crystal phase (% by weight) | | 70 | 62 | 58 | 54 | 51 | 33 |
| Composition of all components in vitreous phase (% by weight) | $SiO_2$ | 55.0 | 60.2 | 61.6 | 63.4 | 65.7 | 73.0 |
| | $Al_2O_3$ | 35.5 | 29.8 | 28.4 | 26.5 | 24.3 | 16.5 |
| | $TiO_2$ | 1.2 | 0.9 | 0.8 | 0.7 | 0.6 | 0.4 |
| | $Fe_2O_3$ | 1.2 | 1.3 | 1.2 | 1.2 | 1.2 | 1.3 |
| | CaO | 0.3 | 0.8 | 1.0 | 1.2 | 1.3 | 1.8 |
| | MgO | 0.2 | 0.7 | 0.8 | 0.8 | 0.7 | 0.9 |

| | | | | | | | |
|---|---|---|---|---|---|---|---|
| | $K_2O$ | 3.9 | 3.6 | 3.6 | 3.6 | 3.6 | 3.6 |
| | $Na_2O$ | 1.2 | 1.6 | 1.6 | 1.7 | 1.7 | 1.9 |
| | $Li_2O$ | 0.0 | 0.0 | 0.0 | 0.0 | 0.0 | 0.0 |
| | $B_2O_3$ | 0.0 | 0.0 | 0.0 | 0.0 | 0.0 | 0.0 |
| | BaO | 0.0 | 0.0 | 0.0 | 0.0 | 0.0 | 0.0 |
| | TOTAL | 99 | 99 | 99 | 99 | 99 | 99 |
| | $K_2O+Na_2O$ | 5.1 | 5.3 | 5.2 | 5.3 | 5.3 | 5.5 |
| Composition of main component in Crystal phase (% by weight) | α-Alumina | 55 | 42 | 37 | 31 | 26 | 0 |
| | Quartz | 8 | 9 | 10 | 11 | 12 | 15 |
| | Mullite | 7 | 10 | 11 | 12 | 13 | 18 |
| | TOTAL | 70 | 62 | 58 | 54 | 51 | 33 |
| Composition of main component in greenware raw material (% by weight) | Clay | 32 | 33 | 33 | 33 | 34 | 35 |
| | Feldspar* | 4 | 7 | 8 | 9 | 11 | 17 |
| | α-Alumina | 58 | 46 | 41 | 35 | 29 | 0 |
| | Silica stone | 6 | 5 | 4 | 4 | 3 | 0 |
| | Pottery stone | 0 | 10 | 14 | 19 | 24 | 48 |
| | TOTAL | 100 | 100 | 100 | 100 | 100 | 100 |
| Properties | Deformation quantity by Firing | 3.7 mm | 5 mm | 7 mm | 9 mm | 11 mm | 21 mm |
| | Shrinkage percentage by Firing | 2.30% | 3.00% | 3.50% | 4.50% | 5.50% | 9.70% |
| | Strength | 93 MPa | 92 MPa | 92 MPa | 92 MPa | 92 MPa | 90 MPa |
| | Thermal shock resistance | 150°C difference | 150°C difference | 150°C difference | 150°C difference | 150°C difference | 150°C difference |
| | Water absorption percentage | 9.30% | 9% | 8% | 7% | 5% | 0.20% |
| | Thermal expansion coefficient | $70\times10^{-7}/°C$ | $70\times10^{-7}/°C$ | $70\times10^{-7}/°C$ | $70\times10^{-7}/°C$ | $70\times10^{-7}/°C$ | $70\times10^{-7}/°C$ |
| | Crazing resistance | No penetration | No penetration | No penetration | No penetration | No penetration | No penetration |

*As feldspar which is the main component of the greenware raw material of the first greenware material, total amount (17% by weight) of feldspar (approx. 15% by weight) and dolomite (approx. 2% by weight) is shown.

**Claims**

1.  A pottery greenware material comprising a first greenware material and a second greenware material, wherein

    both the first greenware material and the second greenware material comprise, as chemical species, $SiO_2$, $Al_2O_3$, and either one or both of $K_2O$ and $Na_2O$; and
    an average particle diameter (D2) of the second greenware material is smaller than an average particle diameter (D1) of the first greenware material.

2.  The pottery greenware material according to claim 1, wherein the first greenware material comprises materials derived from pottery stone as a skeleton material, and the second greenware material comprises materials derived from silica stone and $\alpha$-alumina as a skeleton material.

3.  The pottery greenware material according to claim 1 or 2, wherein the first greenware material comprises materials derived from a stone-based raw material as a main component, and the second greenware material comprises a material derived from a powdered raw material as a main component.

4.  The pottery greenware material according to any one of claims 1 to 3, wherein the first greenware material comprises a mixture obtained by grinding a first greenware raw material, and the second greenware material comprises a mixture obtained by stirring a second greenware raw material.

5.  The pottery greenware material according to claim 4, wherein the first greenware raw material comprises pottery stone, clay (powder), and feldspar as main components, and the second greenware raw material comprises silica stone (powder), $\alpha$-alumina (powder), clay (powder), and feldspar (powder) as main components.

6.  The pottery greenware material according to any one of claims 1 to 5, wherein a deformation quantity by firing is in the range of 4 mm to 13 mm.

7.  The pottery greenware material according to any one of claims 1 to 5, wherein a firing shrinkage rate by firing is in the range of 2.5 to 7.0%.

8.  The pottery greenware material according to any one of claims 1 to 5, wherein a coefficient of water absorption rate is in the range of 4 to 10%.

9.  A method for producing a pottery greenware material, comprising the steps of:

    mixing a first greenware raw material to prepare a first greenware material having a first average particle diameter ($D1_0$),
    mixing a second greenware raw material to prepare a second greenware material having a second average particle diameter ($D2_0$), and
    mixing the first greenware material with the second greenware material; wherein
    both the first greenware material and the second greenware material comprise, as chemical species, $SiO_2$, $Al_2O_3$, and either one or both of $K_2O$ and $Na_2O$, and
    after the first greenware material and the second greenware material are mixed, an average particle diameter (D2) of the second greenware material is smaller than an average particle diameter (D1) of the first greenware material.

10. The method according to claim 9, wherein the first greenware raw material comprises pottery stone, and the second greenware raw material comprises silica stone and $\alpha$-alumina.

11. The method according to claim 9 or 10, wherein the first greenware raw material comprises a stone-based raw material as a main component, and the second greenware raw material comprises a powdered raw material as a main component.

12. The method according to any one of claims 9 to 11, wherein the first greenware raw material comprises pottery stone, clay (powder), and feldspar as main components, and the second greenware raw material comprises silica stone (powder), $\alpha$-alumina (powder), clay (powder), and feldspar (powder) as main components.

**13.** The method according to any one of claims 9 to 12, wherein the first greenware raw materials are mixed by a grinding/mixing method to prepare the first greenware material, and the second greenware raw materials are mixed by a stirring/mixing method to prepare the second greenware material.

**EP 4 159 702 A1**

## EUROPEAN SEARCH REPORT

Application Number

EP 22 19 8559

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 121 615 A1 (ENGLISH CLAYS LOVERING POCHIN) 25 August 1972 (1972-08-25) | 1-4,6-9, 11,13 | INV. C04B33/02 |
| Y | * page 1, line 1 - line 5; claims 1-12; examples I-III; tables I-IV * | 5,10,12 | C04B33/04 C04B33/24 |
| X | CN 106 622 501 A (FUJIAN KEFU MAT CO LTD; FUJIAN LIANGGE KITCHEN AND BATH CO LTD) 10 May 2017 (2017-05-10) | 1-4,6-9, 11,13 | |
| Y | * paragraphs [0021] - [0038]; table 1 * | 5,10,12 | |
| Y | EP 0 584 977 A1 (TOTO LTD [JP]) 2 March 1994 (1994-03-02) * page 7, line 1 - line 23; claims 4-7; examples 1-32; table 1 * | 5,10,12 | |

TECHNICAL FIELDS SEARCHED (IPC)

C04B

The present search report has been drawn up for all claims

| Place of search | Date of completion of the search | Examiner |
|---|---|---|
| Munich | 16 February 2023 | Bonneau, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 8559

This annex lists the patent family members relating to the patent documents cited in the above-mentioned European search report.
The members are as contained in the European Patent Office EDP file on
The European Patent Office is in no way liable for these particulars which are merely given for the purpose of information.

16-02-2023

| Patent document cited in search report | | Publication date | Patent family member(s) | | Publication date |
|---|---|---|---|---|---|
| FR 2121615 | A1 | 25-08-1972 | DE | 2200611 A1 | 20-07-1972 |
| | | | FR | 2121615 A1 | 25-08-1972 |
| | | | GB | 1373361 A | 13-11-1974 |
| | | | IT | 948795 B | 11-06-1973 |
| | | | JP | S4877018 A | 17-10-1973 |
| | | | SE | 376760 B | 09-06-1975 |
| CN 106622501 | A | 10-05-2017 | NONE | | |
| EP 0584977 | A1 | 02-03-1994 | CN | 1089243 A | 13-07-1994 |
| | | | DE | 69308683 T2 | 02-10-1997 |
| | | | EP | 0584977 A1 | 02-03-1994 |
| | | | JP | 2980457 B2 | 22-11-1999 |
| | | | JP | H0656516 A | 01-03-1994 |
| | | | KR | 940005508 A | 21-03-1994 |
| | | | TW | 267996 B | 11-01-1996 |
| | | | US | 5372976 A | 13-12-1994 |

EPO FORM P0459

For more details about this annex : see Official Journal of the European Patent Office, No. 12/82

**REFERENCES CITED IN THE DESCRIPTION**

**Patent documents cited in the description**

- JP H06056516 A
- JP 2001287981 A
- JP 2011116568 A

- CN 112094100 A
- JP H0656516 A
- CN 111393188 A